# EUROPÄISCHE PATENTANMELDUNG

(11) **EP 4 113 163 A2**
(43) Veröffentlichungstag der Anmeldung: **04.01.2023**
(21) Anmeldenummer: 22172421.4
(22) Anmeldetag: 10.05.2022
(51) Int. Cl.: G01S 7/52, G01S 15/08, G01S 15/50, G08B 5/36, G08B 21/18, H02B 1/24, H02B 1/26, H02B 1/28, H02B 1/30, G01S 7/521

(54) **I/O-SYSTEMKOMPONENTE MIT ULTRASCHALLSENSOR SOWIE SCHALT- UND STEUERUNGSSCHRANK UND VERFAHREN ZUR ÜBERWACHUNG EINER SCHALTSCHRANKTÜR**

(30) Priorität: 07.06.2021 DE 102021114531
(71) Anmelder: Turck Holding GmbH, 58553 Halver (DE)
(72) Erfinder: Grabowski, Franz, 46509 Xanten (DE); Gabrysch, Adalbert, 46286 Dorsten (DE); Mertens, Marcel, 47249 Duisburg (DE)
(74) Vertreter: DTS Patent- und Rechtsanwälte Schnekenbühl und Partner mbB

(57) **Zusammenfassung**

Die vorliegende Erfindung betrifft eine I/O-System-Komponente (1) für insbesondere einen Schalt- und Steuerungsschrank für Komponenten und/oder Funktionsbausteine eines I/O-Netzwerkes, die ein Gehäuse (2), mindestens eine Leiterplatte (3) und mindestens einen Sensor mit zugehöriger Sensor-Leiterplatte (5) zur Erfassung von einer physikalischen Größe umfasst, wobei das Gehäuse (2) der I/O-System-Komponente (1) ein Sensorfenster (6) aufweist und der Sensor ein Ultraschallsensor (10) ist, welcher im Inneren des Gehäuses (2) und hinter dem Sensorfenster (5) angeordnet ist. Die Sensor-Leiterplatte (5) ist datenleitend mit der Leiterplatte (3) (Host-Platine) der I/O-System-Komponente (1) verbunden. Dabei ist der Abstrahlwinkel des Ultraschalls derart, dass dieser lotrecht oder weitestgehend lotrecht auf eine der Frontseite (2.1) gegenüberliegende oder - stehende Fläche treffen kann, und mittels des Ultraschallsensors (10) der Abstand und/oder Abstandsänderungen hierzu feststellbar sind. Weiterhin ist mit der Erfindung ein Schalt- und Steuerungsschrank mit einer solchen I/O-System-Komponente und ein zugehöriges Überwachungsverfahren umfasst.

## Beschreibung

Die vorliegende Erfindung betrifft eine I/O-System-Komponente, insb. zum Einbau in einen Schalt- und Steuerungsschrank, nach dem Oberbegriff des Anspruchs 1. Weiterhin ist ein Schalt- und Steuerungsschrank von der Erfindung nach dem Oberbegriff des Anspruchs 8 umfasst, sowie ein zugehöriges Verfahren nach dem Oberbegriff des Anspruchs 13.

Im Stand der Technik sind sensorbasierte Überwachungen einer Schaltschranktür bekannt, um einem unerwünschten Eintritt von Staub, Spänen, Flüssigkeiten, usw. vorzubeugen, welche Funktionen und die Einhaltung von Explosionsschutzbedingungen gefährden könnten.

Aus der DE 11 2016 0044 841 T5 ist hierzu ein elektronisches Schloss und Schließsystem bekannt. Dieses umfasst ein Verriegelungselement, das elektronisch aktivierbar ist, sowie ein drahtloses Kommunikationsmodul und ein elektronisches Steuermodul, das in verschiedenen Betriebsarten arbeitet. Zustandsdaten des Schlosses werden autonom an eine zentrale Steuerung gesendet und dort ausgewertet, so dass Öffnungszustände erfassbar und auswertbar sind.

Weiterhin offenbart die DE 10 2015 105 212 A1 eine Sensoreinrichtung, die in der Lage ist, eine zeitliche Änderung mehrerer Umgebungsparameter wie Luftfeuchte und Lufttemperatur im Schalt- und Steuerungsschrank und/oder die Stellung der Schalt- und Steuerungsschranktür zu erkennen. Hierbei werden die diesbezüglichen Sensorsignale ausgewertet und über einen Kommunikationskanal an eine Schaltzentrale übermittelt oder über eine oder mehrere farbige LED am Ort des Schalt- und Steuerungsschranks angezeigt.

Auch wenn diese Lösungen grundsätzlich die Überwachung einer Schranktür und die Signalgebung gewährleisten, sind sie konstruktiv aufwändig, da zusätzliche Spannungsversorgungen und Input-Kanäle benötigt werden, so dass diese Lösungen auch wirtschaftlich nachteilig sind.

Es ist die Aufgabe der vorliegenden Erfindung, eine konstruktiv einfache und wirtschaftlich vorteilhafte Lösung aufzuzeigen, um die Verschlussüberwachung eines Schalt- und Steuerungsschrankes konstruktiv zu ermöglichen und sicher zu überwachen.

Diese Aufgabe wird erfindungsgemäß gelöst durch eine I/O-System-Komponente mit den Merkmalen des Anspruchs 1. Vorteilhafte Ausgestaltungen sind in den Unteransprüchen angegeben. Weiterhin löst ein Schalt- und Steuerungsschrank mit den Merkmalen des Anspruchs 8 diese Aufgabe, sowie ein Verfahren nach den Merkmalen des Anspruchs 13. Die jeweiligen Ausgestaltungen sind in den zugehörigen Unteransprüchen angegeben.

Danach wird die Aufgabe durch eine I/O-System-Komponente gelöst, das insbesondere für einen Schalt- und Steuerungsschrank für Komponenten und/oder Funktionsbausteine eines I/O-Netzwerkes vorzusehen ist. Es umfasst ein Gehäuse mit einer Frontseite, einer Oberseite, einer Unterseite und in der Regel zwei Seitenflächen, wobei diese Orientierungen mit Blick auf die übliche Einbaulage in einem Schalt- und Steuerungsschrank zu verstehen sind, ohne hierbei die Erfindung einzuschränken. Die Frontseite des Gehäuses steht in ihrer üblichen Einbaulage mit ihrer Längserstreckung vertikal und parallel zu einer Gehäuse- oder Verschlusstür eines zugehörigen Schalt- und Steuerungsschrankes, in welchem die I/O-System-Komponente ein- oder angebracht ist. Weiterhin umfasst die I/O-System-Komponente mindestens eine Leiterplatte mit üblichen elektronischen Bausteinen und Funktionselementen und mindestens einem Sensor zur Erfassung von mindestens einer physikalischen Größe.

Den Kern bildet hierbei, dass das Gehäuse der I/O-System-Komponente ein Sensorfenster aufweist und der mindestens eine Sensor ein Ultraschallsensor ist, mit optional einer zugehörigen Sensor-Leiterplatte, wobei der Ultraschallsensor und die optionale, zugehörige Sensor-Leiterplatte im Inneren des Gehäuses der I/O-System-Komponente angeordnet sind, wobei der Ultraschallsensor hierbei hinter dem Sensorfenster angeordnet ist. Unter "hinter" dem Sensorfenster ist jede unmittelbare Nachbarschaft zu verstehen, auch eine Aufnahme des Ultraschallsensors in das Sensorfenster, als Trag- und Halterrahmen für den Ultraschallsensor. Der Ultraschallsensor und/oder die zugehörige Sensor-Leiterplatte ist mindestens datenleitend mit der Leiterplatte (Host-Platine) der I/O-System-Komponente verbunden. Idealerweise erfolgt auch die Versorgung über die Leiterplatte.

Unter einer I/O-System-Komponente soll ganz allgemein ein elektronisches I/Ofähiges Bauteil oder Baugruppe verstanden werden, welches insbesondere in einem I/O-System-Netzwerk eingebunden ist und üblicherweise in einem Schalt- und/oder Steuerungsschrank für das Netzwerk oder einen Netzwerkabschnitt untergebracht ist. Insbesondere kann die I/O-System-Komponente ein I/O-Modul, ein Gateway-Modul, ein Netzteil zur Spannungsversorgung oder sonst eine elektrische/elektronische Komponente sein.

Weiterhin soll Schalt- und Steuerungsschrank, auch lesbar als Schalt- und/oder Steuerungsschrank, nicht limitierend verstanden werden, und meint jegliches Gehäuse mit einer zerstörungsfrei lösbaren Öffnungsmöglichkeit, insbesondere einem tür- oder klappenartigen Öffnungselement, in welchem elektronische, datenleitende und/oder datenverarbeitende Komponenten untergebracht sind, insbesondere auf einer gemeinsamen Trag- und/oder Versorgungsstruktur.

Um die leitende Verbindung und/oder Kompatibilität der Sensor-Leiterplatte zur Leiterplatte der I/O-System-Komponente und deren Versorgungsspannung herzustellen, kann dieser weitere, benötigte Halbleiter und elektronische Komponenten, wie beispielsweise Linear-Spannungsregler, 10-Pegelwandler, Kapazitäten und Widerstände aufweisen.

Bei der Lage des Ultraschallsensors ist entscheidend, dass der Abstrahlwinkel des Ultraschalls derart ausgerichtet ist, dass dieser lotrecht oder weitestgehend lotrecht auf eine der Frontseite des Gehäuses gegenüberliegende oder -stehende Fläche in deren SOLL-Lage treffen kann, so dass mittels des Ultraschallsensors der Abstand und/oder Abstandsänderungen zu dieser gegenüberliegenden oder - stehenden Fläche, insbesondere einer gegenüberliegenden inneren Oberfläche einer Tür oder einer Abdeckung, feststellbar sind.

Das Messprinzip ist hierbei derart, dass der im Schalt- und Steuerungsschrank in der I/O-System-Komponente integrierte Ultraschall-Senor die Entfernung zwischen dem Sensor bzw. der I/O-System-Komponente und der Innenfläche der Schalt- und Steuerungsschranktür bzw. des Sichtfensters in der Schalt- und Steuerungsschranktür misst. Der Sensor selbst arbeitet dabei idealerweise in einem Puls-Echo Modus. Hierbei sendet und empfängt ein einzelner Ultraschallsensor seinen eigenen, reflektierten Ultraschall. Durch die Messung der Schallwellenlaufzeit (Umlaufzeit), auch Time-of-Flight genannt (ToF), wird die Entfernung zum reflektierenden Objekt oder Oberfläche gemessen. Durch einen speziellen ASIC-Baustein wird aus der Umlaufzeit die Entfernung zum Objekt (Tür bzw. Scheibe) berechnet und bedarfsweise mindestens zeitweise gespeichert. Die Messwerte oder hieraus abgeleiteten Daten können beispielsweise zyklisch von einem Mikrocontroller der I/O-System-Komponente über einen Inter-Integrated Circuit (I²C- oder TWI-Schnittstelle) abgerufen werden.

Bei einer verbesserten Ausführungsform der I/O-System-Komponente, ist zusätzlich zum Ultraschallsensor mindestens ein Temperatursensor und/oder Feuchtigkeitssensor im Inneren der I/O-System-Komponente angeordnet. Hierdurch lassen sich die einzelnen physikalischen Messdaten gegenseitig verifizieren und bedarfsweise Grenzwerte kombinieren und dynamisch anpassen, weil bei offener Schalt- und Steuerungsschranktür die einzelnen physikalischen Größen in der Regel mit unterschiedlicher Schnelligkeit eine Veränderung erfahren, abhängig von der Weite der Öffnung der Schranktür und den temporären Zuständen der umgebenden Atmosphäre.

Bei einer konstruktiv und wirtschaftlich besonders vorteilhaften Ausführungsform der I/O-System-Komponente, ist das Sensorfenster in der Frontfläche des Gehäuses angeordnet, wobei der Ultraschallsensor hinter dem Sensorfenster angeordnet ist. Dabei ist auf der Frontseite und/oder angrenzend zum Sensorfenster kein den Ultraschall leitendes Reflexionselement angeordnet, sondern der Ultraschall kann umlenkungsfrei, geradlinig auf eine gegenüberliegende Fläche treffen, dort reflektiert und nachfolgend vom Ultraschallsensor im selben Sensorfenster wieder empfangen werden.

Eine alternative Ausführungsform sieht vor, das Sensorfenster nicht auf der Frontseite, sondern in der Oberseite, der Unterseite und/oder einer der Seitenflächen anzuordnen und angrenzend an das Sensorfenster ein den Ultraschall leitendes Reflexionselement vorzusehen. Diese ist derart ausgerichtet und geneigt, dass der vom Ultraschallemitter gesendete Ultraschall in seinem Winkel abgelenkt wird, insbesondere um 90° in seiner Richtung abgelenkt wird, und hierdurch nachfolgend lotrecht oder weitgehend lotrecht auf eine der Frontseite gegenüberliegende oder -stehende Fläche leitbar ist.

Der Ultraschallsensor ist idealerweise ein Miniatur-Ultraschall-Senor, mit äußeren Abmessungen (B x L x H) von weniger als 5 x 5 x 3 mm, idealerweise von weniger als 4 x 4 x 1,5 mm. Dieser Miniatur-Ultraschallsensor arbeitet im Niederspannungsbereich von typisch 1,8 VDC.

Der vorgenannte Ultraschallsensor ist hierbei geeignet, Abstände von 4 cm bis 120 cm mit einer sehr hohen Genauigkeit zu detektieren.

Der Ultraschall-Senor mit der zugehörigen Sensor-Leiterplatte ist als Modul aufgebaut, umfassend einen Ultraschall-Wandler (Ultraschall-Transducer), einen Analog-Digital-Wandler (ADC), einen Digital-Signal-Prozessor (DSP) und einen Mikrocontroller (µController). Der Ultraschallsensor arbeitet idealerweise nach dem vorgenannten ToF-Verfahren (Time-of-Flight-Verfahren), bei der die Laufzeit (Umlaufzeit) des Schalls ermittelt wird. Die Verknüpfung und Anbindung an einen übergeordneten Host-Mikrocontroller erfolgen in bekannter Weise über eine I²C- oder TWI-Schnittstelle, die ebenfalls auf der Sensor-Leiterplatte angeordnet sein können.

Von der Erfindung ist auch ein Schalt- und Steuerungsschrank umfasst, insbesondere für Komponenten und/oder Funktionsbausteine eines I/O-Netzwerkes. Hierbei umfasst der Schalt- und Steuerungsschrank ein Schalt- und Steuerungsschrankgehäuse mit einer Schaltschranktür, die an mindestens einer Schwenkachse kipp- und/oder schwenkbar gelagert ist, wobei im Inneren des Schalt- und Steuerungsschranks mindestens eine I/O-System-Komponente sowie Stromführungs- und/oder Befestigungsmittel für die I/O-System-Komponente und/oder gegebenenfalls weiterhin vorgesehene elektronische Bauteile angeordnet sind. Die Schwenkachse der Schaltschranktür kann Teil eines beliebig ausgebildeten Türscharniers sein, das geeignet ist, die Schaltschranktür von einer Verschluss- oder Verriegelungsposition (SOLL- oder Ausgangslage) in mindestens eine temporäre und/oder teilweise Öffnungsstellung (IST-Lage) zu führen und zu halten.

Der Kern ist hierbei, dass die I/O-System-Komponente einen Ultraschallsensor umfasst oder selbst als smarter Ultraschallsensor ausgebildet ist, mittels welchem der Abstand und/oder die Abstandsänderung der inneren Oberfläche der Schaltschranktür des Schalt- und Steuerungsschrankgehäuses zur I/O-System-Komponente und/oder einer (Unter-)Komponente der I/O-System-Komponente detektierbar ist. Insbesondere um den Abstand der I/O-System-Komponente und/oder einer (Unter-)Komponente hiervon, von der inneren Oberfläche der Schaltschranktür in der Verschluss- oder Verriegelungsposition als der SOLL-Lage zu überwachen und Abweichungen des Abstands und der zeitlichen Dauer zur Anzeige zu bringen.

Bei einem Sonderfall stellt eine einzelne I/O-System-Komponente als räumlich einzelnes Bauteil oder einzelne Baugruppe das gesamt I/O-System dar, so dass der Schalt- und Steuerungsschrank nur dieses eine Bauteil oder Baugruppe umschließt. Dieser Sonderfall kann insbesondere dann eintreten, wenn die einzelne I/O-System-Komponente gewisse Schutzklassen am Nutzungsort nicht erfüllt und somit zusätzlich abgekapselt werden muss. Im Regelfall werden in einem Schalt- und Steuerungsschrank neben der erfindungsgemäßen I/O-System-Komponente weitere elektrische und/oder elektronische Bauteile untergebracht sein.

Vorteilhafterweise ist der Schalt- und Steuerungsschrank hierbei mit einer I/O-System-Komponente ausgestattet, wie es vorstehend in unterschiedlichen Ausführungsformen beschrieben wurde. Bei einer Ausführungsform ist der Schalt- und Steuerungsschrank mit einer Schaltschranktür ausgestattet, die mindestens eine Sichtscheibe auf mindestens einer Teilfläche der Schaltschranktür aufweist, wobei die innere Oberfläche einer Sichtscheibe in diesem Fall auch als innere Oberfläche der Schaltschranktür verstanden wird. Im Schalt- und Steuerungsschrank kann der Ultraschallsensor vorteilhafterweise derart angeordnet werden, dass dieser, das Sensorfenster und/oder das Reflexionselement auf Höhe beziehungsweise der Sichtscheibe in der Schaltschranktür gegenüberliegend angeordnet ist.

Bei dem erfindungsgemäßen Verfahren zur Überwachung einer Schaltschranktür eines Schalt- und Steuerungsschrankes, insbesondere eines Schalt- und Steuerungsschranks für Komponenten und/oder Funktionsbausteine eines elektronischen Netzwerkes, insbesondere eines I/O-Netzwerkes, wird in analoger Weise zu den obigen Ausführungen, die IST-Lage der Schaltschranktür im Abgleich mit einer SOLL-Lage der Schaltschranktür, als Abstand und/oder Abstandsänderung der inneren Oberfläche der Schaltschranktür und/oder deren Sichtscheibe zu einer im Inneren des Schalt- und Steuerungsschrankes befindlichen I/O-System-Komponente und/oder einer Unterkomponente der I/O-System-Komponente mittels eines Sensors ermittelt.

Hierbei werden die Messwerte und Signale des Sensors und/oder die hieraus abgeleiteten Daten, insbesondere digitale Daten, über die Abstände, Abstandsänderungen und/oder deren Dauer, mindestens temporär in einem verbundenen Speichermedium gespeichert und/oder ein Warn- oder Hinweissignal ausgelöst. Dies umfasst auch die Weiterleitung analoger Messwerte oder hieraus gewandelte digitale Daten an eine nachgelagerte Steuer- oder Prozessoreinheit (Host-Prozessor), welche nachlaufend ein Warn- oder Steuersignal aussendet.

Weiterhin kann das Warn- oder Hinweissignal auch aus einer optischen Anzeige bestehen, insbesondere aus einer LED-Anzeige an einer inneren Oberfläche eines Bauteils- oder einer Komponenten im Schalt- und Steuerungsschrank, insbesondere auf dem Gehäuse der I/O-System-Komponente selbst.

Bei der Variante des Verfahrens wird das Warn- oder Hinweissignal nach einer definierten Abweichungszeit der IST-Lage von der SOLL-Lage und/oder nach einer Summe von Abweichungszeiten der IST-Lage von der SOLL-Lage (Verschluss- und Verriegelungslage) ausgelöst. Vorteilhafterweise wird der Abstand und/oder die Abstandsänderung mittels eines Ultraschallsensors erfasst, der bei einer weiter verbesserten Variante im Inneren der I/O-System-Komponente, als integraler Bestandteil der I/O-System-Komponente angeordnet ist.

Insgesamt wird durch das ganz oder teilweise Öffnen der Schaltschranktür der Abstand der inneren Oberfläche der Sichtscheibe oder der Tür zum Ultraschallsensor vergrößert und parallel der Winkel einer von der inneren Oberfläche reflektierten Ultraschallwellen verändert. Hierdurch wird die Laufzeit des rücklaufenden Signals (Empfangssignal) verlängert und/oder abgeschwächt, worin eine Abstandsvergrößerung erkannt wird. Eine spezielle Kalibrierung des Ultraschallsensors ist hierbei nicht notwendig.

Die Schwellenwerte für einen Verschlusszustand (SOLL-Lage) einer Schaltschranktür und einem oder mehreren Öffnungszuständen (IST-Lage), können über den Mikrocontroller der I/O-System-Komponenten angelernt und in einem zugehörigen Speicher abgelegt werden. Bedarfsweise wird das Detektionsergebnis einer IST-Lage, insbesondere als geöffnete Schalt- und Steuerungsschranktür, von der I/O-System-Komponente direkt oder mittelbar an ein Leitsystem gesendet.

Der Ultraschallsensor bzw. das Ultraschall-Modul führt die Abstandsmessungen mit einer konfigurierbaren Abtastrate durch und speichert die Messdaten/-werte oder hieraus abgeleitete Daten im Datenspeicher auf der Sensor-Leiterplatte ab. Der Mikrocontroller der I/O-System-Komponente (Host-Prozessor) liest diese Messdaten oder die hieraus abgeleiteten Daten aus und leitet- bzw. bearbeitet diese Daten bedarfsweise weiter.

Vorteilhafterweise ist die I/O-System-Komponente und/oder der Schalt- und Steuerungsschrank nach einem der vorstehend genannten Ausführungsformen ausgebildet. Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Seiten- und Schnittansicht eines Schalt- und Steuerungsschranks einer I/O-System-Komponente, als teilweise geöffnetes Gateway-Modul,
- Fig. 2: in der perspektivischen Ansicht den Schalt- und Steuerungsschrank nach Fig. 1 mit geöffneter Schaltschranktür,
- Fig. 3: eine zur Figur 1 analoge Ausführungsform des Schalt- und Steuerungsschranks mit einer alternativen Anordnung des Ultraschallsensors im Gateway-Modul,
- Fig. 4: eine Detailansicht der Frontseite des Gateway-Moduls, benachbart zu elektronischen Bauteilen bzw. weiteren I/O-System-Komponenten,
- Fig. 5: eine schematische, horizontale Schnittdarstellung des Gateway-Moduls,
- Fig. 6: einen schematischen Aufbau des Ultraschallsensors mit zugehöriger Sensor-Leiterplatte als Schaltplan und
- Fig. 7a, b, c: den Ultraschallsensor in drei Ansichten.

Nachfolgend haben Bezugszeichen stets dieselbe Bedeutung und werden trotz Darstellung in den Figuren nicht immer textlich erneut genannt oder erläutert, wenn dies bereits zu einer anderen Figur vorgenommen wurde.

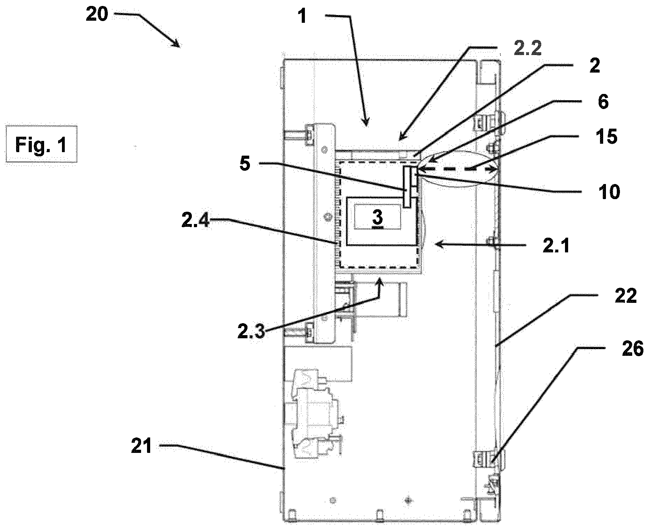

Es zeigt Figur 1 den Schalt- und Steuerungsschrank 20, in dem als I/O-System-Komponente beispielhaft ein Gateway-Modul 1 von der Seite dargestellt ist. Der Schalt- und Steuerungsschrank weist ein im Wesentlichen umseitiges Schalt- und Steuerungsschrankgehäuse 21 auf, wobei die Frontseite von der Schaltschranktür 22 gebildet wird, die mittels der mehrfach vorgesehenen Verriegelung 26 verschlossen werden kann und geschlossen dargestellt ist, was der SOLL-Lage der Schaltschranktür 22 entspricht.

Das Gateway-Modul 1 weist ein Gehäuse 2 auf, mit einer Frontseite 2.1, die der Schaltschranktür 22 gegenübersteht, sowie mit einer Oberseite 2.2, einer Unterseite 2.3 und zwei Seitenflächen 2.4. In der Frontseite 2.1 ist ein Sensorfenster 6 als Öffnung vorgesehen, hinter welchem, im Inneren des Gateway-Moduls 1, ein Ultraschallsensor 10 angeordnet ist, der wiederum auf einer Sensor-Leiterplatte 5 befestigt ist. Die Sensor-Leiterplatte 5 ist mit der zentralen Leiterplatte 3 (Host-Platine) des Gateway-Moduls 1 datenleitend und/oder als Spannungsquelle verbunden.

Mit dem Doppelpfeil auf der Höhe des Sensorfensters 6 sind die Schallrichtungen 15 des ausgesendeten und reflektierten Ultraschalls als gestrichelter Doppelpfeil skizziert.

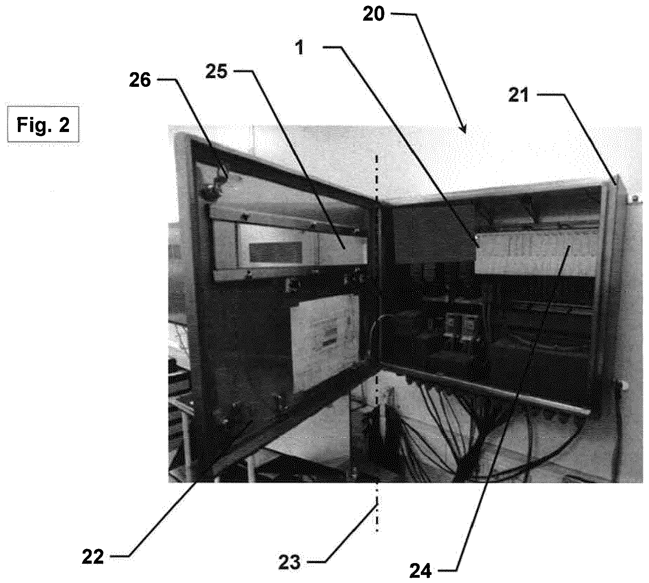

In der Figur 2 ist der geöffnete Schalt- und Steuerungsschrank 20 dargestellt, der in der Schaltschranktür 22 ein sich über die Breite erstreckendes Sichtfenster 25 aufweist. Die Schaltschranktür 22 ist an Scharnieren gehalten und schwenkt um die vertikale Schwenkachse 23. Im Inneren des Schalt- und Steuerungsschrankes 20 sind eine Vielzahl von elektronischen Bauteilen 24 flach aneinander und parallel zum Gateway-Modul 1 dargestellt, die an einer rückwärtigen Trag- und Versorgungsstruktur befestigt sind. Die elektrischen Bauteile 24 sind in dem gezeigten Beispiel insbesondere ein Gateway- und/oder I/O-Module des I/O-Systems. An der Unterseite des Schalt- und Steuerungsschrankes 20 sind diverse Kabel zur Daten- und Stromleitung angeordnet.

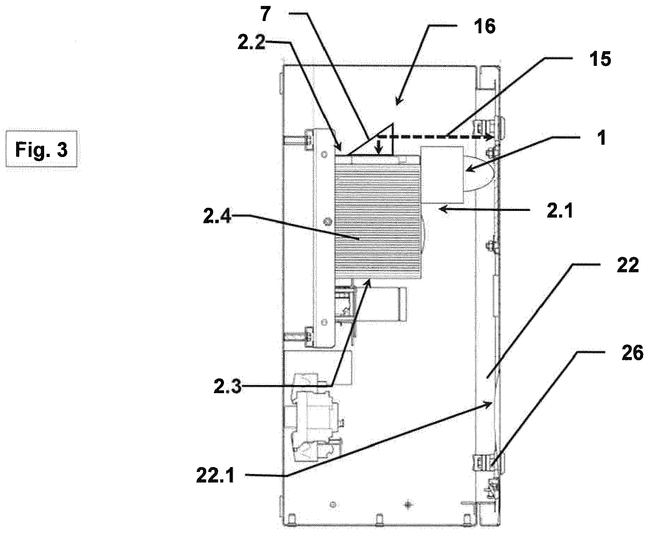

In der Figur 3 ist eine zur Figur 1 analoge Ausführungsform des Schalt- und Steuerungsschranks 20 gezeigt, wobei das Gateway-Modul 1 mit einer alternativen Anordnung des Ultraschallsensors im Gateway-Modul 1 mit geschlossener Seitenfläche 2.4 dargestellt ist. Der Unterschied zur Ausführungsform nach Figur 1 besteht darin, dass das Sensorfenster 6 auf der Oberseite 2.2 angeordnet ist und angrenzend bzw. das Sensorfenster 6 überdeckend, ein haubenartiges Leitelement 16 umfassend ein Reflexionselement 7 vorgesehen ist, welches die Schallrichtung 15 leitet, und den aus dem Sensorfenster 6 austretenden Ultraschall um 90° ablenkt und in Richtung der Schaltschranktür 22 lenkt, so dass der Ultraschall im Idealfall lotrecht auf die innere Oberfläche 22.1 der Schaltschranktür 22 oder ein dort angeordnetes Sichtfenster 25 trifft und entsprechend reflektiert wird. Nicht dargestellt, aber in analoger Weise könnte das Sensorfenster 6 und ein zugehöriges Leitelement 16 sowie das zugehörige Reflexionselement 7 an der Unterseite 2.3 oder in der Seitenfläche 2.4 angeordnet werden.

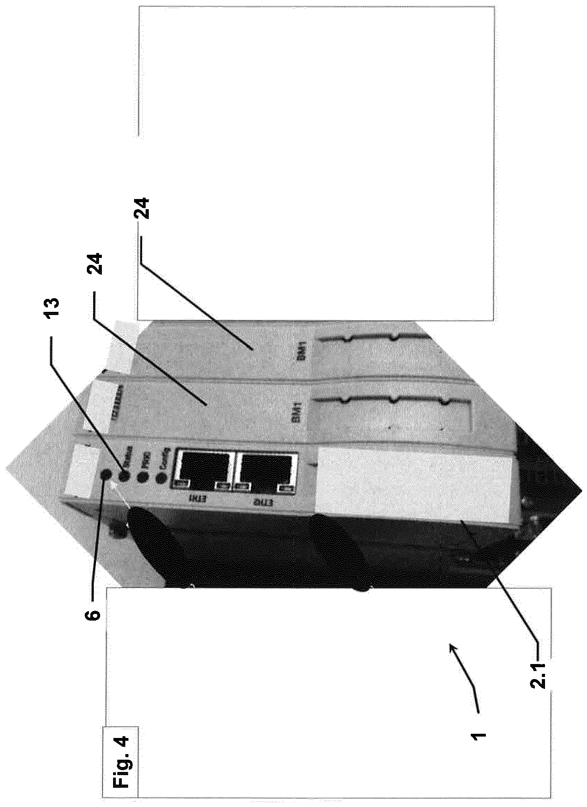

In der Figur 4 ist das Gateway-Modul 1, parallel und fluchtend zu weiteren elektronischen Bauteilen 24 angeordnet, welche als ebenfalls I/O-System-Komponenten ausgebildet sein können. Auf der Frontseite 2.1 des Gateway-Moduls 1 ist am oberen Ende das runde Sensorfenster 6 zu erkennen, hinter welchem im Inneren der Ultraschallsensor 10 (nicht dargestellt) angeordnet ist. Unterhalb des Sensorfensters 6 ist eine LED-Anzeige 13 vorgesehen, mittels welcher ein optischer Warn- und/oder Statushinweis gegeben werden kann. Unterhalb des Sensorfensters 6 und der LED-Anzeige 13 sind weitere LED-Anzeigen und zwei Steckplätze für Ethernet-Stecker zu erkennen.

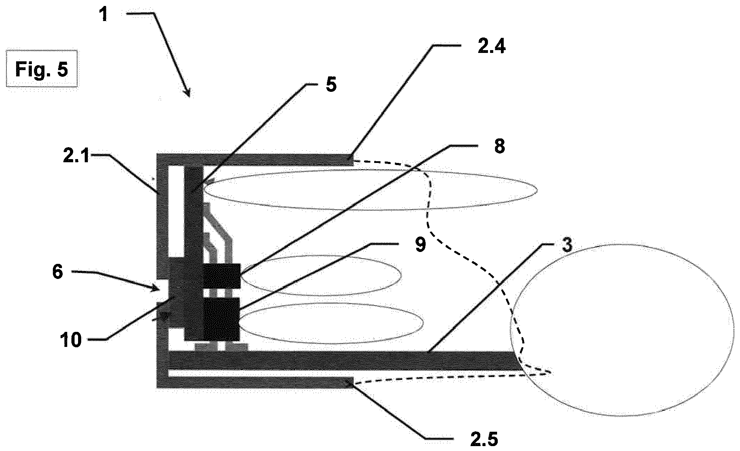

In der schematischen Abbildung nach Figur 5, ist ein Ausschnitt des Gateway-Moduls 1 zu erkennen, dessen zentrale Leiterplatte 3 (Platine) sich parallel zu den nur teilweise dargestellten Seitenwänden 2.4, 2.5 erstreckt. Über die Stiftleiste 8 und die Buchsenleiste 9 auf der Rückseite der Sensor-Leiterplatte 5 ist diese unter anderem mit der Leiterplatte 3 verbunden. Auf der Vorderseite der Sensorleiterplatte 5 und direkt hinter dem Sensorfenster 6 in der Frontseite 2.1 des Gateway-Moduls 1, ist der eigentliche Ultraschallsensor 10 angeordnet.

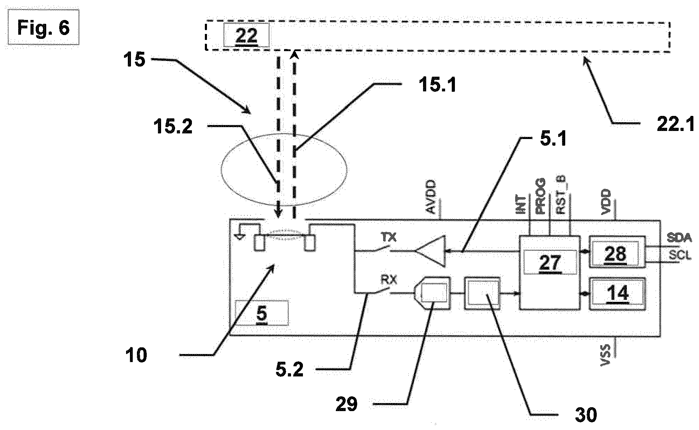

Figur 6 zeigt den schematischen Aufbau des Ultraschallsensors 10 mit zugehöriger Sensor-Leiterplatte 5 als Schaltplan. Auf der Sensorleiter-Platte 5 ist ein Controller 27 und ein Inter-Integrated Circuit 28 (I²C) vorgesehen. Veranlasst vom Controller 27 über den TX-Pfad 5.1, sendet der Ultraschallsensor 10 intermittierend Schall 15.1 (gestrichelter Pfeil) aus, der auf die innere Oberfläche 22.1 einer gegenüberliegenden Schaltschranktür 22 trifft. Von dort wird der Schall reflektiert und als rücklaufender Schall 15.2 (gestrichelter Pfeil) vom Ultraschallsensor 10 empfangen und die Messwerte/-daten, wie beispielsweise die Laufzeit und/oder die Schallintensität über den RX-Pfad 5.2, einen Analog-Digital-Umsetzer 29 (ADC) und einem Digital-Signal-Prozessor 30 (DSP) dem Controller 27 zugeleitet. Die Daten werden dann in einem Datenspeicher 14 der Sensor-Leiterplatte 5 mindestens zeitweise abgelegt. Auf diesen Datenspeicher 14 hat der Prozessor (Host-Prozessor) des Gateway-Moduls 1 Zugriff und kann diese Daten bedarfsweise abrufen und weiterverarbeiten.

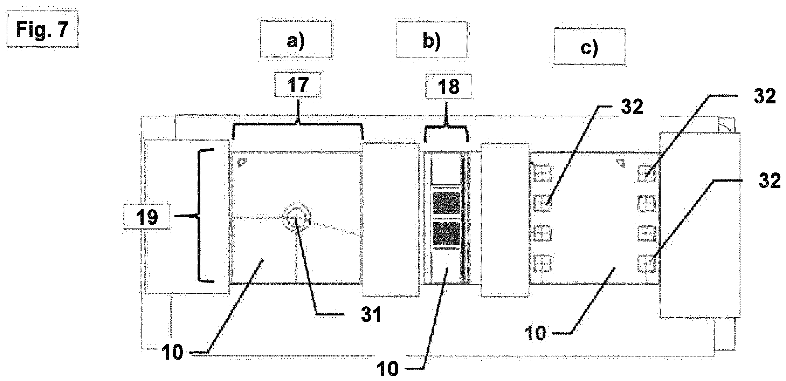

Schließlich zeigt Figur 7 in drei Ansichten (a, b und c) den eigentlichen Ultraschallsensor 10. In dem gezeigten Beispiel hat der Ultraschallsensor 10 eine Breite 17 und eine Länge 19 von jeweils 3,5 mm (Fig. 7a) und eine Höhe 18 von 1,26 mm (Fig. 7b), wobei im Zentrum des Ultraschallsensors 10 der Schallauslass 31 angeordnet ist (Fig. 7a). In der Figur 7c sind acht Lötanschlusselemente 32 zur Verbindung mit der Sensor-Leiterplatte 5 bzw. deren Leitungsbahnen und zugehörigen Komponenten vorgesehen.

Wie vorstehend angedeutet, ist das Gateway-Modul nur eine mögliche Bau- oder Komponentenart einer I/O-System-Komponente. Vorliegend sind nur die für die Erfindung wesentlichen Elemente beschrieben worden, so dass die sonstigen üblichen und/oder nötigen Bauteile, Komponenten oder Leitungen bedarfsweise hinzugefügt oder kombiniert werden können. Genutzte Abkürzungen und Symbole der Elektrotechnik haben, wenn nicht ausdrücklich erläutert und gesondert definiert, ihre übliche Bedeutung für den Fachmann.

### Bezugszeichenliste

- 1: Gateway-Modul als I/O-System-Komponente
- 2: Gehäuse
2.1 Frontseite
2.2 Oberseite
2.3 Unterseite
2.4 Seitenfläche
2.5 Seitenfläche

- 3: Leiterplatte
- 5: Sensor-Leiterplatte
5.1 TX-Pfad
5.2 RX-Pfad

- 6: Sensorfenster
- 7: Reflexionselement
- 8: Stiftleiste
- 9: Buchsenleiste
- 10: Ultraschallsensor
- 11: Temperatursensor
- 12: Feuchtigkeitssensor
- 13: LED-Anzeige
- 14: Datenspeicher
- 15: Schallrichtung
15.1 Schall, gesendet
15.2 Schall, reflektiert

- 16: Leitelement
- 17: Breite
- 18: Höhe
- 19: Länge
- 20: Schalt- und Steuerungsschrank
- 21: Schalt- und Steuerungsschrankgehäuse
- 22: Schaltschranktür
22.1 Oberfläche, innere

- 23: Schwenkachse
- 24: elektronisches Bauteil
- 25: Sichtfenster
- 26: Verriegelung
- 27: Controller
- 28: Inter-Integrated Circuit (I²C)
- 29: Analog-Digital-Umsetzer (ADC)
- 30: Digital-Signal-Prozessor (DSP)
- 31: Schallauslass
- 32: Lötanschlusselement

## Patentansprüche

1. I/O-System-Komponente (1), insbesondere für einen Schalt- und Steuerungsschrank für Komponenten und/oder Funktionsbausteine eines I/O-Netzwerkes, umfassend ein Gehäuse (2) mit einer Frontseite (2.1), einer Oberseite (2.2), einer Unterseite (2.3) und mindestens einer Seitenfläche (2.4), mindestens eine Leiterplatte (3) und mindestens einem Sensor zur Erfassung von mindestens einer physikalischen Größe, **dadurch gekennzeichnet, dass**
das Gehäuse (2) der I/O-System-Komponente (1) ein Sensorfenster (6) aufweist und der mindestens eine Sensor ein Ultraschallsensor (10) ist, welcher im Inneren des Gehäuses (2) angeordnet ist und der Ultraschallsensor (10) hinter dem Sensorfenster (6) angeordnet ist, und wobei der Ultraschallsensor (10) datenleitend mit der Leiterplatte (3) der I/O-System-Komponente (1) verbunden ist.

2. I/O-System-Komponente (1) nach Anspruch 1, **dadurch gekennzeichnet, dass** der Ultraschallsensor (10) auf einer von der Leiterplatte (3) unterschiedlichen Sensor-Leiterplatte (5) angeordnet ist, und die Sensor-Leiterplatte (5) datenleitend mit der Leiterplatte (3) verbunden ist.

3. I/O-System-Komponente (1) nach einem der Ansprüche 1 oder 2, **dadurch gekennzeichnet, dass** zusätzlich zum Ultraschallsensor (10) mindestens ein Temperatursensor (11) und/oder Feuchtigkeitssensor (12) im Inneren der I/O-System-Komponente angeordnet sind.

4. I/O-System-Komponente (1) nach einem der vorherigen Ansprüche,
**dadurch gekennzeichnet, dass** der Abstrahlwinkel des Ultraschalls lotrecht oder weitestgehend lotrecht auf eine der Frontseite (2.1) gegenüberliegende oder -stehende Fläche treffen kann, und mittels des Ultraschallsensors (10) der Abstand und/oder Abstandsänderungen zu dieser gegenüberliegenden oder -stehenden Fläche, insbesondere einer gegenüberliegenden inneren Oberfläche einer Tür oder einer Abdeckung, feststellbar sind.

5. I/O-System-Komponente (1) nach einem der vorherigen Ansprüche,
**dadurch gekennzeichnet, dass** das Sensorfenster (6) in der Frontfläche (2.1) des Gehäuses (2) angeordnet und der Ultraschallsensor (10) hinter dem Sensorfenster (6) angeordnet ist, und wobei nach dem Sensorfenster (6) kein den Ultraschall leitendes Reflexionselement (7) angeordnet ist.

6. I/O-System-Komponente (1) nach einem der vorherigen Ansprüche 1 bis 4, **dadurch gekennzeichnet, dass** das Sensorfenster (6) in der Oberseite (2.2), der Unterseite (2.3) und/oder einer der Seitenflächen (2.4, 2.5) angeordnet ist, und wobei angrenzend an das Sensorfenster (6) ein den Ultraschall leitendendes Reflexionselement (7) angeordnet ist, mittels welchem der Ultraschall um 90° in Richtung einer der Frontseite (2.1) gegenüberliegenden oder -stehenden Fläche leitbar ist.

7. I/O-System-Komponente (1) nach einem der vorherigen Ansprüche,
**dadurch gekennzeichnet, dass** diese als Gateway-Modul, I/O-Modul, Kopfstation oder Netzelement/-teil zur Spannungsversorgung ausgebildet ist.

8. Schalt- und Steuerungsschrank (20), insbesondere für Komponenten und/oder Funktionsbausteine eines I/O-System-Netzwerkes, umfassend
- ein Schalt- und Steuerungsschrankgehäuse (21) mit einer Schaltschranktür (22), die an mindestens einer Schwenkachse (23) kipp- und/oder schwenkbar gelagert ist,
- mindestens eine I/O-System-Komponente (1), sowie Stromführungs- und/oder Befestigungsmittel für die mindestens eine I/O-System-Komponente (1), **dadurch gekennzeichnet, dass**
die I/O-System-Komponente (1) einen Ultraschallsensor (10) umfasst, mittels welchem der Abstand und/oder die Abstandsänderung der inneren Oberfläche der Schaltschranktür (22) des Schalt- und Steuerungsschrankgehäuses (21) zur mindestens einen I/O-System-Komponente (1) und/oder einer Unterkomponente der I/O-System-Komponente (1) detektierbar ist.

9. Schalt- und Steuerungsschrank (20) nach Anspruch 8, **dadurch gekennzeichnet, dass** die I/O-System-Komponente (1) nach einem der Ansprüche 1 bis 6 ausgebildet ist.

10. Schalt- und Steuerungsschrank (20) nach Anspruch 8 oder 9, **dadurch gekennzeichnet, dass** mindestens eine Sichtscheibe (25) in der Schaltschranktür (22) angeordnet ist.

11. Schalt- und Steuerungsschrank (20) nach Anspruch 10, **dadurch gekennzeichnet, dass** der Ultraschallsensor (10), das Sensorfenster (6) und/oder das Reflexionselement (7) auf Höhe und/oder der Sichtscheibe (25) gegenüber angeordnet ist.

12. Schalt- und Steuerungsschrank (20) nach einem der Ansprüche 8 bis 11, **dadurch gekennzeichnet, dass** mindestens ein weiteres elektronisches Bauteil (24), insbesondere eine Vielzahl von unterschiedlichen elektronischen Bauteilen (24) sowie zugehörige Stromführungs- und/oder Befestigungsmittel vorgesehen sind.

13. Verfahren zur Überwachung einer Schaltschranktür (22) eines Schalt- und Steuerungsschrankes (20), insbesondere eines Schalt- und Steuerungsschranks (20) für Komponenten und/oder Funktionsbausteine eines I/O-Netzwerkes, **dadurch gekennzeichnet, dass** die IST-Lage der Schaltschranktür (22) im Abgleich mit einer SOLL-Lage der Schaltschranktür (22) als Abstand und/oder Abstandsänderung der inneren Oberfläche (22.1) der Schaltschranktür (22) zu einer im Inneren des Schalt- und Steuerungsschrankes (20) befindlichen I/O-System-Komponente (1) und/oder einer Unterkomponente der I/O-System-Komponente (1) mittels eines Sensors ermittelt wird, und wobei der Sensor die Daten über die Abstände und/oder Abstandsänderungen mindestens temporär in einem verbundenen Speichermedium speichert und/oder ein Warn- oder Hinweissignal auslöst.

14. Verfahren nach Anspruch 13, **dadurch gekennzeichnet, dass** das Warn- oder Hinweissignal nach einer definierten Abweichungszeit von der SOLL-Lage und/oder nach einer Summe von Abweichungszeiten von der SOLL-Lage ausgelöst wird.

15. Verfahren nach Anspruch 13 oder 14, **dadurch gekennzeichnet, dass** der Abstand und/oder die Abstandsänderung mittels eines Sensors erfasst wird, der ein Ultraschallsensors (10) ist.

16. Verfahren nach einem der Ansprüche 13 bis 15, **dadurch gekennzeichnet, dass** der Ultraschallsensor (10) im Inneren der I/O-System-Komponente (1) angeordnet ist.

17. Verfahren nach einem der Ansprüche 13 bis 16, **dadurch gekennzeichnet, dass** die I/O-System-Komponente (1) nach einem der Ansprüche 1 bis 5 ausgebildet ist.

18. Verfahren nach einem der Ansprüche 13 bis 17, **dadurch gekennzeichnet, dass** der Schalt- und Steuerungsschrank (20) nach einem der Ansprüche 6 bis 11 ausgebildet ist.

19. Verfahren nach einem der Ansprüche 13 bis 18, **dadurch gekennzeichnet, dass** der Ultraschallsensor (10) die Abstandsmessungen selbstständig mit einer konfigurierbaren Abtastrate durchführt, wobei die derart ermittelten Messwerte und/oder hieraus abgeleiteten Daten, insbesondere digitale Daten, in einem Datenspeicher abgespeichert werden, insbesondere in einem Datenspeicher (14), der auf der Sensor-Leiterplatte (5) angeordnet ist.

20. Verfahren nach Anspruch 19, **dadurch gekennzeichnet, dass** auf einer Leiterplatte (3) der I/O-System-Komponente (1) ein Mikrocontroller (Host-Prozessor) vorgesehen ist, und wobei dieser die Messwerte und/oder Daten aus dem Datenspeicher mindestens zeitweise ausliest und weiterverarbeitet.
